# DEMANDE DE BREVET EUROPEEN

(11) **EP 1 507 112 A1**
(43) Date de publication de la demande: **16.02.2005**
(21) Numéro de dépôt: 04291880.5
(22) Date de dépôt: 23.07.2004
(51) Int. Cl.: F16L 29/00, B63B 27/24, F17D 5/00, B67D 5/70

(54) **Dispositif de mise en communication de deux conduits à moyens de destruction**

(30) Priorité: 14.08.2003 FR 0309941
(71) Demandeur: KSB S.A.S, 92230 Gennevilliers (FR)
(72) Inventeur: Laulhe, René, 33140 Villenave d'Ornon (FR); Garrigues, Jean-Claude, 33140 Cadaujac (FR)
(74) Mandataire: Eidelsberg, Albert

(57) **Abrégé**

Ce dispositif de mise en communication d'un méthanier à un terminal comprend un premier robinet dont la virole 1 de sortie est reliée à la virole 2 d'entrée d'un second robinet par une liaison 3 et des moyens pyrotechniques de destruction de la liaison 3.

## Description

La présente invention se rapporte aux dispositifs de mise en communication de deux conduits et tout particulièrement aux dispositifs de connexion de la ligne de transfert entre un méthanier et le terminal de déchargement ainsi qu'aux lignes de mise en communication d'une source mobile de fluide, tel qu'un méthanier, avec un réservoir fixe, tel qu'un terminal de déchargement.

Comme dans de nombreux secteurs, l'industrie du gaz naturel, produit inflammable, a le souci de la sécurité des personnes, des biens et de l'environnement. La production, le traitement, le transfert et le stockage du gaz naturel nécessitent de grandes précautions pour éviter les accidents : explosions, effet sur les personnes, contamination de l'environnement.

Dans l'état actuel de la technique, des lois, des règlements, des spécifications techniques imposent et définissent des schémas de sécurité permettant d'éviter ou de limiter le risque d'accident.

C'est le cas notamment des installations de transfert de gaz naturel liquéfié (GNL) entre les lieux de production ou du stockage et les bateaux méthaniers assurant le transport du GNL entre le terminal de chargement (départ) et le terminal de déchargement (arrivée).

L'objet de l'invention concerne les éléments de connexion de la ligne de transfert entre le terminal et le méthanier. Cette ligne de transfert de GNL comprend en particulier :
- Le système de connexion-déconnexion de service, utilisé pour les opérations normales,
- Deux robinets, utilisés pour sectionner le flot de GNL en fin de chargement et de déchargement et le confiner dans la ligne de transfert lorsque celle-ci est déconnectée du bateau méthanier en fin de chargement ou de déchargement et d'éviter ainsi le lâché de GNL dans l'atmosphère.
- Un déconnecteur de secours utilisé en situation anormale de dérive du méthanier par rapport au terminal ou en cas d'incendie.

Les robinets sont manoeuvrés par des actionneurs automatiques selon des séquences bien précises.

Le déconnecteur de secours, situé entre les deux robinets est utilisé en cas de situation d'urgence et lorsque la séquence normale de déconnexion ne peut plus être utilisée faute de temps.

Afin d'éviter le lâché de GNL à l'atmosphère, l'ouverture du déconnecteur de secours ne peut se faire que si le robinets sont fermés. Les impositions séquentielles sont décrites dans les règlements applicables et décrits par l'OCIMF (Oil Companies International Marine Forum) ou par la norme EN 1474 : (Installations et équipements relatifs au gaz naturel liquéfié ((Conception et essais des bras de chargement/déchargement)).

Les commandes du connecteur-déconnecteur de service, des robinets et du déconnecteur de secours sont interverrouillées afin d'interdire l'ouverture intempestive des déconnecteurs si les robinets ne sont pas fermés.

Les brevets 2 572 786, 2 827 033, 0 096 209 ou encore 2 580 367 donnent un aperçu des solutions existant actuellement.

L'interverrouillage des différentes fonctions, conduit à :
- des rajouts de dispositifs mécaniques supplémentaires et de dispositifs de contrôle.
- adapter les schémas de commande électrique et hydraulique permettant d'assurer le séquentiel fonctionnel voulu.

L'inconvénient de ce qui existe aujourd'hui est que tous ces éléments constituent autant de sources de dysfonctionnement de la chaîne de contrôle-commande de l'ensemble et que la probabilité d'un dysfonctionnement ne permettant pas l'ouverture du déconnecteur de secours est décuplée par la multiplication des éléments de sécurité : le risque majeur étant dans ce cas de voir la ligne de transfert du GNL arrachée et détruite en cas de dérive accidentelle du bateau par rapport au terminal et de ne plus maîtriser le confinement du GNL avec tout ce que cela suggère comme conséquences.

L'invention pallie cet inconvénient par un dispositif qui exclut pratiquement tout danger que la ligne de transfert du gaz liquéfié soit arrachée et détruite si le méthanier dérive accidentellement par rapport au terminal en permettant de les découpler, d'une part bien plus rapidement que jusqu'ici, quelle que soit la position du système de déconnexion de secours, et d'autre part même si celui-ci est en panne.

L'invention a donc pour objet un dispositif de mise en communication de deux conduits comprenant un premier robinet dont la virole de sortie est reliée à la virole d'entrée d'un second robinet par une liaison de mise en communication de deux conduits, comprenant un premier robinet dont la virole (1) de sortie est reliée à la virole (2) d'entrée d'un second robinet par une liaison (3) et des moyens (31) de connexion - déconnexion de service destinés à connecter - déconnecter la liaison (3), caractérisé par des moyens, notamment pyrotechniques, de destruction de la liaison soi-même.

On détruit ainsi la liaison mécanique directe entre les deux robinets et non pas les moyens de connexion-déconnexion de service, à l'exception éventuellement d'un collier de serrage des viroles qui peut en faire partie ou éventuellement les viroles ou le collier qui les serre.

Alors que, dans les brevets cités précédemment, on s'ingéniait à faire en sorte que la déconnexion de secours ne porte pas atteinte à la possibilité de fonctionner ultérieurement, on se détourne, suivant l'invention, complètement de cette conception. Suivant l'invention, on détruit la liaison d'une manière irréversible. En tranchant ainsi le noeud gordien, on procure plusieurs avantages. Ce qui n'était auparavant qu'un système de déconnexion de secours devient maintenant un système de déconnexion d'urgence, puisque les moyens pyrotechniques donnent une action quasi immédiate et agissent de manière autonome. Une panne du système de connexion-déconnexion ou une lenteur due à sa position ou à la complexité de ce système sont sans effet sur la rapidité de la déconnexion en cas d'urgence. Certes la liaison est détruite, mais en réalité cette destruction n'intervient qu'en cas d'accident, donc en principe presque jamais.

Le brevet français 2 827 033 ne décrit pas de moyen de destruction de la liaison des deux viroles de deux robinets.

Le brevet américain King 4 921 000 indique clairement que, dans une situation d'urgence, on fait fonctionner le piston 51 pour rompre, non pas la liaison soi-même, mais les connecteurs 18 qui font partie du dispositif de déconnexion du service. Il y a bien rupture d'une pièce, mais rupture d'une pièce frangible du dispositif de déconnexion de service qui, pour le reste, est conservé et qui, s'il ne fonctionne pas ou si son fonctionnement est lent, fait que le méthanier arrache toute l'installation.

A la page 4, les lignes 20 et suivantes du document King, on mentionne que le piston 51 peut être remplacé par un dispositif explosif. Mais le dispositif explosif doit jouer le même rôle que le piston 51. Il ne détruit pas la canalisation soi-même, mais il fait fonctionner le dispositif de déconnexion de service, certes éventuellement rapidement en soi par rupture d'une pièce, mais avec tous les inconvénients liés à cette utilisation du système de connexion - déconnexion de service pour une opération d'urgence et notamment d'une panne de ce système et de sa lenteur de réaction.

Suivant un mode de réalisation tirant toutes les conséquences avantageuses de la conception radicale suivant l'invention mettant en oeuvre une destruction, la ligne de mise en communication d'une source mobile de fluide avec un réservoir fixe comprend un système de connexion-déconnexion de service et un dispositif suivant l'invention, distinct du système de connexion-déconnexion et monté en aval, dans le sens de la source au réservoir, du système de connexion-déconnexion. La rupture du dispositif suivant l'invention, laisse le système de connexion-déconnexion de service intact et la séparation du système de connexion-déconnexion et du dispositif suivant l'invention permet de simplifier la constitution du système de connexion-déconnexion de service, au point même que, dans un mode de réalisation particulièrement simple, la liaison du dispositif suivant l'invention est constituée par un corps d'un seul tenant commun aux deux robinets et les moyens pyrotechniques sont disposés de manière à cisailler le corps. Cette solution d'une grande simplicité a l'avantage d'éliminer une jonction avec joint d'étanchéité, source potentielle de fuite de gaz liquéfié vers l'atmosphère.

Il est aussi possible d'utiliser plusieurs moyens pyrotechniques, certains agissant par l'intermédiaire du système de connexion-déconnexion de service en le faisant fonctionner en urgence et d'autres de destruction de la liaison, lorsque la voie de déconnexion par le système de connexion-déconnexion de service n'a pas fonctionné.

Suivant un mode de réalisation du dispositif de mise en communication de deux conduits, la liaison comporte un collier de serrage des deux viroles ensemble et les moyens pyrotechniques sont disposés de manière à rompre le collier. Le collier peut faire partie d'un système de déconnexion de secours.

Aux dessins annexés, donnés uniquement à titre d'exemple, :

la figure 1 est une vue en élévation d'un dispositif suivant l'invention,

la figure 2 est une vue de côté correspondant à la figure 1,

la figure 3 est une vue semblable à la figure 1 du dispositif après rupture de la liaison,

la figure 4 est une vue de côté correspondant à la figure 3,

la figure 5 est une vue en élévation d'une variante d'un dispositif suivant l'invention,

la figure 6 est une vue de côté correspondant à la figure 5,

la figure 7 est une vue correspondant à la figure 6, après que la liaison a été rompue,

la figure 8 est une vue d'une variante avec un double corps monobloc,

la figure 9 est une vue semblable à la figure 8 après rupture de la liaison et,

la figure 10 est un schéma d'une ligne de communication suivant l'invention.

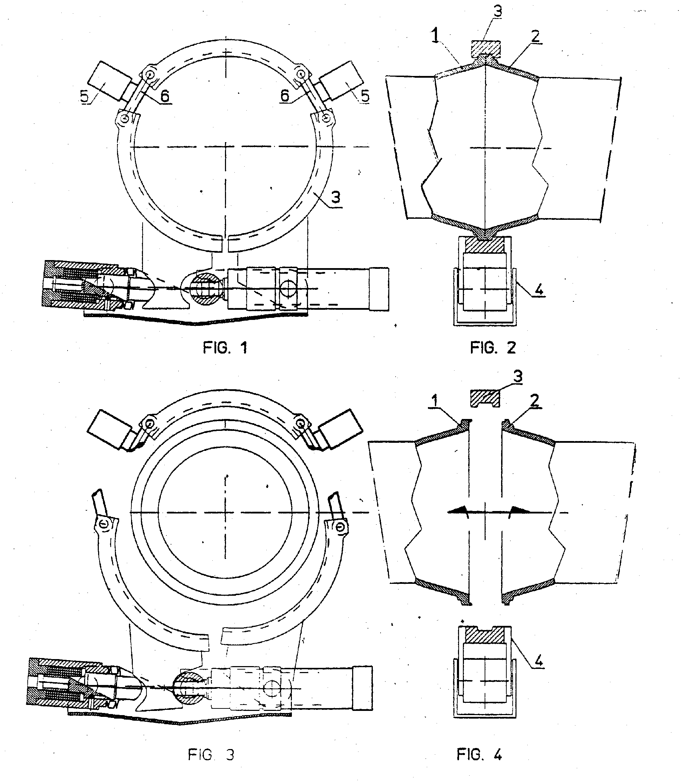

Le dispositif représenté aux figures 1 à 4 comprend un premier robinet illustré par sa virole 1 de sortie et un deuxième robinet illustré par sa virole 2 d'entrée. Les deux viroles sont assemblées par un collier 3 à la manière habituelle, le collier 3 étant muni d'un système de verrouillage 4. En position verrouillée, le collier 3 est fermé et assure la liaison permanente en service des deux viroles des robinets 1 et 2. L'ouverture commandée du système de verrouillage 4 permet l'ouverture du collier 3 et la séparation des viroles 1 et 2 lors d'une procédure de séparation de secours. On trouvera une description détaillée du dispositif de ce genre et notamment de son système de connexion-déconnexion au brevet français 2 580 367.

Suivant l'invention il est prévu deux cartouches 5 pyrotechniques du type à effet de détonation d'une charge explosive qui, lorsqu'elles sont allumées, cisaillent les bielles 6 d'assemblage des éléments articulés du collier 3 ou ses tirants de liaison. Les cartouches 5 pyrotechniques sont montées directement sur le collier et sont indépendantes dans leur fonctionnement du système de verrouillage 4 de déconnexion de secours.

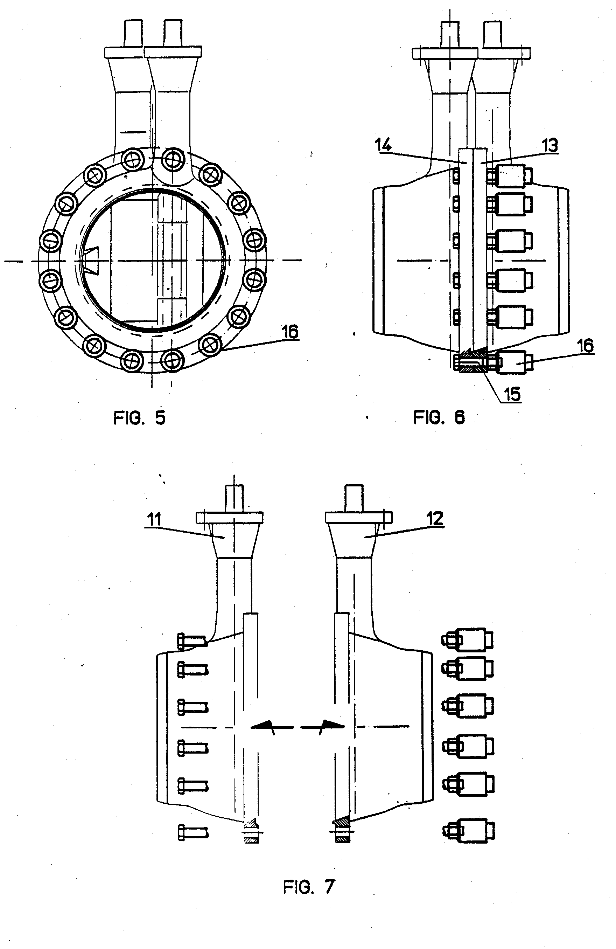

Aux figures 5 à 7, deux robinets 11, 12 sont assemblés par leurs brides 13, 14 de raccordement ou viroles à l'aide de vis 15 d'assemblage réparties sur le pourtour. Chaque vis comporte une cartouche 16 pyrotechnique qui permet de la cisailler comme cela apparaît à la figure 7.

Aux figures 8 à 9, les deux robinets 21, 22 ont un double corps 23 commun dont la virole 24 de liaison peut être cisaillée par une cartouche pyrotechnique annulaire 25.

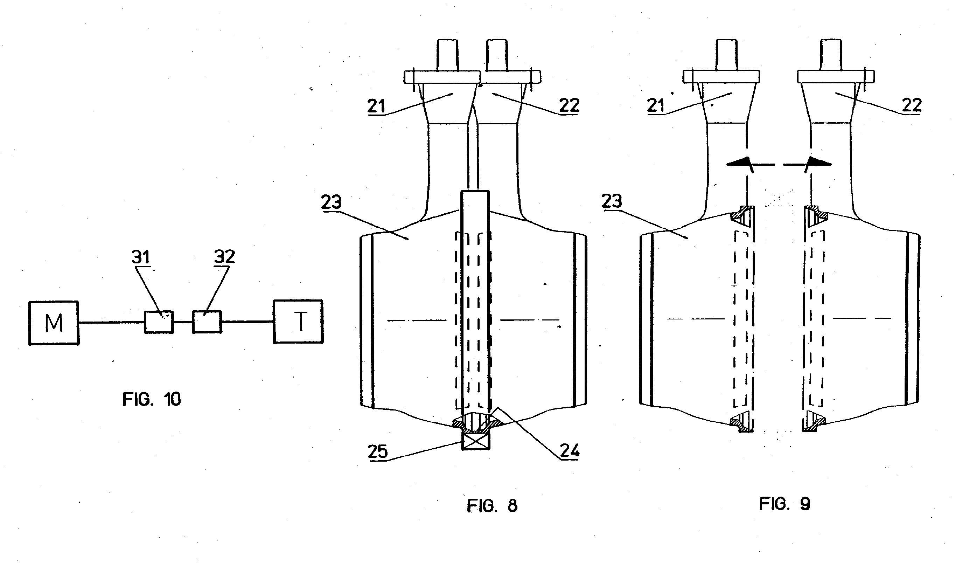

La ligne de mise en communication d'un méthanier M avec un terminal T représenté à la figure 10 comprend, dans le sens allant du méthanier au terminal successivement, un système 31 de connexion-déconnexion de service, soit classique, soit même démuni de tout dispositif de déconnexion de secours et un dispositif 32 suivant l'invention. Si le méthanier M dérive, on détruit le dispositif 32. Le cas échéant, on essaie d'abord de faire fonctionner le dispositif 31 si on en a le temps et s'il n'est pas en panne et sinon on détruit le dispositif 32.

## Revendications

1. Dispositif de mise en communication de deux conduits, comprenant un premier robinet dont la virole (1) de sortie est reliée à la virole (2) d'entrée d'un second robinet par une liaison (3) et des moyens (31) de connexion - déconnexion de service destinés à connecter - déconnecter la liaison (3), **caractérisé par** des moyens (5) de destruction de la liaison (3) soi-même.

2. Dispositif de mise en communication de deux conduits, suivant la revendication 1, **caractérisé en ce que** les moyens (5) sont des moyens pyrotechniques.

3. Dispositif de mise en communication de deux conduits, suivant la revendication 1 ou 2, **caractérisé en ce que** la liaison comporte un collier (3) de serrage des deux viroles (1, 2) ensemble et les moyens (5) pyrotechniques sont disposés de manière à rompre le collier (3).

4. Dispositif de mise en communication de deux conduits, suivant la revendication 3, **caractérisé en ce que** le collier (3) fait partie d'un système (4) de déconnexion de secours.

5. Dispositif de mise en communication de deux conduits, suivant la revendication 1, **caractérisé en ce que** les deux viroles sont assemblées par des vis (15) et les moyens (16) pyrotechniques sont disposés de manière à cisailler les vis (15).

6. Dispositif de mise en communication de deux conduits, suivant la revendication 1, **caractérisé en ce que** la liaison est constituée par un corps (24) d'un seul tenant commun aux deux robinets et les moyens (25) pyrotechniques sont disposés de manière à cisailler le corps (24).

7. Ligne de mise en communication d'une source (M) mobile de fluide avec un réservoir (T) fixe, comprenant un système (31) de connexion-déconnexion de service, **caractérisée par** un dispositif de séparation d'urgence (32) suivant l'une des revendications 1, 2, 3, 5 ou 6 monté en aval, dans le sens de la source (M) au réservoir (T), du système (31).
